# EUROPEAN PATENT APPLICATION

(11) **EP 1 631 002 A2**
(43) Date of publication of application: **01.03.2006**
(21) Application number: 05107118.1
(22) Date of filing: 02.08.2005
(51) Int. Cl.: H04L 12/24

(54) **Automatic configuration of network performance models**

(30) Priority: 02.08.2004 US 598568 P; 02.12.2004 US 4021
(71) Applicant: Microsoft Corporation, Redmond WA 98052 (US)
(72) Inventor: Papaefstathiou, Efstathios, Redmond, WA 98052 (US); Hardwick, Jonathan C., Redmond, WA 98052 (US)
(74) Representative: Grünecker, Kinkeldey, Stockmair & Schwanhäusser Anwaltssozietät

(57) **Abstract**

The described systems, methods, and data structures are directed at automatic configuration of transaction-based performance models. Models of an infrastructure are created and automatically configured using data provided by existing management tools that are designed to monitor the infrastructure. These automatically configured models may be used to simulate the performance of the infrastructure in the current configuration or other potential configurations.

## Description

### CROSS-REFERENCE TO RELATED APPLICATION(S)

This application claims the benefit of U. S. Provisional Application No. 60/598,568, filed August 2, 2004, titled "SYSTEM AND METHOD FOR PROCESSING PERFORMANCE MODELS TO REFLECT ACTUAL COMPUTER SYSTEM DEPLOYMENT SCENARIOS", the content of which is hereby incorporated by reference.

This application is related to U. S. Patent Application, No. 09/632,521, titled "A PERFORMANCE TECHNOLOGY iNFRASTRUCTURE FOR MODELING THE PERFORMANCE OF COMPUTER SYSTEMS", the content of which is hereby incorporated by reference.

This application is related to U. S. Patent Application, No. 10/053,733, titled "LATE BINDING OF RESOURCE ALLOCATION IN A PERFORMANCE SIMULATION INFRASTRUCTURE", the content of which is hereby incorporated by reference.

This application is related to U. S. Patent Application, No. 10/053,731, titled "EVALUATING HARWARE MODELS HAVING RESOURCE CONTENTION", the content of which is hereby incorporated by reference.

This application is related to U. S. Patent Application, No. 10/304,601, titled "ACTION BASED SERVICES IN A PERFORMANCE SIMULATION INFRASTRUCTURE", the content of which is hereby incorporated by reference.

### BACKGROUND

Computer system infrastructure has become one of the most important assets for many businesses. This is especially true for businesses that rely heavily on network-based services. To ensure smooth and reliable operations, substantial amount of resources are invested to acquire and maintain the computer system infrastructure. Typically, each sub-system of the computer system infrastructure is monitored by a specialized component for that sub-system, such as a performance counter. The data generated by the specialized component may be analyzed by an administrator with expertise in that sub-system to ensure that the sub-system is running smoothly.

A successful business often has to improve and expand its capabilities to keep up with customers' demands. Ideally, the computer system infrastructure of such a business must be able to constantly adapt to this changing business environment. In reality, it takes a great deal of work and expertise to be able to analyze and assess the performance of an existing infrastructure. For example, if a business expects an increase of certain types of transactions, performance planning is often necessary to determine how to extend the performance of the existing infrastructure to manage this increase.

One way to execute performance planning is to consult an analyst. Although workload data may be available for each sub-system, substantial knowledge of each system and a great deal of work are required for the analyst to be able to predict which components would need to be added or reconfigured to increase the performance of the existing infrastructure. Because of the considerable requirement for expertise and effort, hiring an analyst to carry out performance planning is typically an expensive proposition.

Another way to execute performance planning is to use an available analytical tool to predict the requirements for the workload increase. However, many of the conventional tools available today are programs that simply extrapolate from historical data and are not very accurate or flexible. Also, subjective decisions will still have to be made to choose the components that will deliver the predicted requirements.

A user-friendly tool that is capable of accurately carrying out performance planning continues to elude those skilled in the art.

### DESCRIPTION OF THE DRAWINGS

These and other features and advantages of the present invention will be better understood from the following detailed description read in light of the accompanying drawings, wherein:

FIG. 1 shows an example system for automatically configuring a transaction-based performance model.

FIG. 2 shows example components of the automated modeling module illustrated in FIG. 1.

FIG. 3 shows an example process for simulating the performance of an infrastructure.

FIG. 4 shows an example process for automatically configuring a model of an infrastructure.

FIG. 5 shows an example process for simulating an infrastructure using an automatically configured model.

FIG. 6 shows an exemplary computer device for implementing the described systems and methods.

### DETAILED DESCRIPTION

The systems, methods, and data structure described herein relates to automatic configuration of transaction-based performance models. Models of an infrastructure are created and automatically configured using data provided by existing management tools that are designed to monitor the infrastructure. These automatically configured models may be used to simulate the performance of the infrastructure in the current configuration or other potential configurations.

The automated performance model configuration system described below enables performance modeling to be efficiently and accurately executed. This system allows users to quickly and cost-effectively perform various types of analysis. For example, the described system may be used to execute a performance analysis for a current infrastructure, which includes both hardware and software components. The system may import data from the various configuration databases to represent the latest or a past deployment of the information technology (IT) infrastructure. This model configuration may serve as the baseline for analyzing the performance of the system. The types of analysis may include capacity planning, bottleneck analysis, or the like. Capacity planning includes the process of predicting the future usage requirements of a system and ensuring that the system has sufficient capacity to meet those requirements. Bottleneck analysis includes the process of analyzing an existing system to determine which components in the system are operating closest to maximum capacity. These are typically the components that will need to be replaced first if the capacity of the overall system is to be increased.

The described system may also be used for executing a what-if analysis. Using the baseline models, a user may predict the performance of the infrastructure with one or more changes to the configurations. Examples of what-if scenarios include an increase in workload, changes to hardware and/or software configuration parameters, or the like.

The described system may further be used for automated capacity reporting. For example, a user may define a specific time interval for the system to produce automatic capacity planning reports. When this time interval elapses, the system imports data for the last reporting period and automatically configures the models. The system then uses the configured models to execute a simulation and produces reports for the future capacity of the system. The system may raise an alarm if the capacity of the system will not be sufficient for the next reporting period.

The described system may be used for operational troubleshooting. For example, an IT administrator may be notified by an operational management application that a performance threshold has been exceeded. The administrator may use the described system to represent the current configuration of the system. The administrator may then execute a simulation to identify whether the performance alarm is the cause of a capacity issue. Particularly, the administrator may determine whether the performance alarm is caused by an inherent capacity limitation of the system or by other factors, such as an additional application being run on the system by other users.

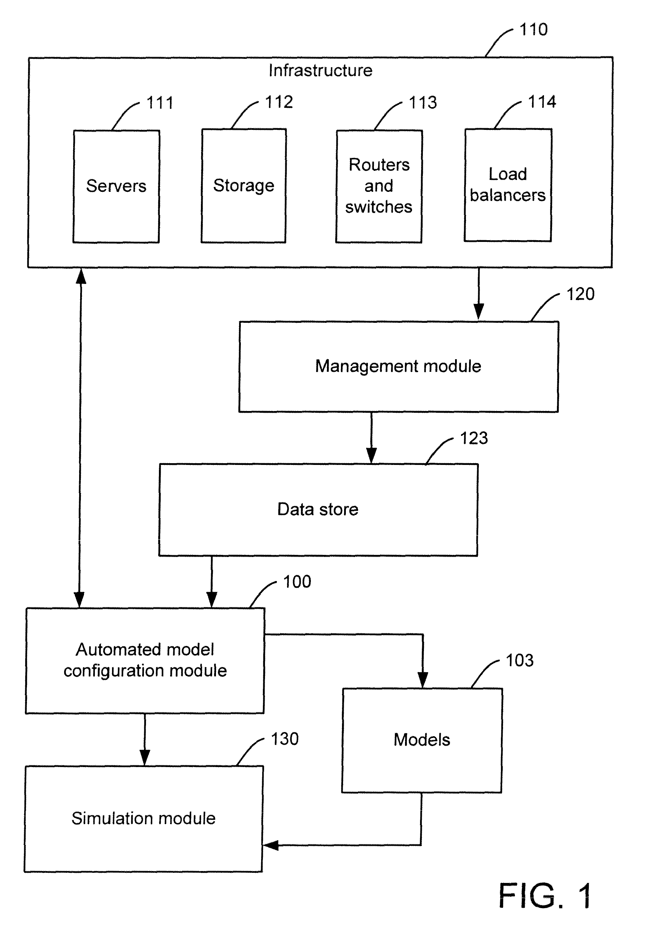

FIG. 1 shows an example system for automatically configuring a transaction-based performance model. In one implementation, the example system may include automated model configuration module 100 and simulation module 130, which are described as separate modules in FIG. 1 for illustrative purposes. In actual implementation, automated model configuration module 100 and simulation module 130 may be combined into a single component. The example system is configured to model infrastructure 110 and to emulate events and transactions for simulating the performance of infrastructure 110 in various configurations.

Infrastructure 110 is a system of devices connected by one or more networks. Infrastructure 110 may be used by a business entity to provide network-based services to employees, customers, vendors, partners, or the like. As shown in FIG. 1, infrastructure 110 may include various types of devices, such as servers 111, storage 112, routers and switches 113, load balancers 114, or the like. Each of the devices 111-114 may also include one or more logical components, such as applications, operating system, or other types of software.

Management module 120 is configured to manage infrastructure 110. Management module may include any hardware or software component that gathers and processes data associated with infrastructure 110, such as change and configuration management (CCM) applications or operations management (OM) applications. For example, management module 120 may include server management tools developed by MICROSOFT®, such as MICROSOFT® Operation Manager (MOM), System Management Server (SMS), System Center suite of products, or the like. Typically, the data provided by management module is used for managing and monitoring infrastructure 110. For example, a system administrator may use the data provided by management module 120 to maintain system performance on a regular basis. In this example, the data provided by management module is also used to automatically create models for simulation.

Management module 120 is configured to provide various kinds of data associated with infrastructure 110. For example, management module 120 may be configured to provide constant inputs, such as a list of application components from the logical topology of infrastructure 110, transaction workflows, a list of parameter names from the user workload, action costs, or the like. Management module 120 may be configured to provide configurable inputs, such as the physical topology of infrastructure 110, logical mapping of application components onto physical hardware from the logical topology, values of parameters from the user workload, or the like.

Management module 120 may also include discovery applications, which are written specifically to return information about the configuration of a particular distributed server application. For example, discovery applications may include WinRoute for MICROSOFT® Exchange Server, WMI event consumers for MICROSOFT® WINDOWS® Server, or the like. These discovery applications may be considered as specialized versions of CCM/OM for a particular application. However, these applications are typically run on demand, rather than as a CCM/OM service. Discovery applications may be used to obtain the physical topology, logical mapping, and parameter values needed to configure a performance model in a similar way to that described for CCM/OM databases. The CCM/OM databases may be used with a translation step customized for each discovery application. The data may be returned directly, rather than being extracted from a database. However, this method may involve extra delay while the discovery application is executed.

Data store 123 is configured to store data provided by management module 120. The data may be organized in any kind of data structure, such as one or more operational databases, data warehouse, or the like. Data store 123 may include data related to the physical and logical topology of infrastructure 110. Data store 123 may also include data related to workload, transactional workflow, or action costs. Such data may be embodied in the form of traces produced by event tracing techniques, such as Event Tracing for WINDOWS® (ETW) or Microsoft SQL Traces.

Automated model configuration module 100 is configured to obtain information about infrastructure 110 and to automatically create and configure models 103 of each components of infrastructure 110 for simulation. Models 103 are served as inputs to simulation module 130.

Automated model configuration module 100 may interact with infrastructure 110 and perform network discovery to retrieve the data for constructing the models. However, automated model configuration module 100 is typically configured to obtain the data from operational databases and data warehouse that store information gathered by administrative components for infrastructure 110. For example, automated model configuration module 100 may retrieve the data from data store 123, which contains data provided by management module 120.

Automated model configuration module 100 may provide any type of models for inputting to simulation module 130. In one embodiment, automated model configuration generates models for infrastructure 110 relating to physical topology, logical topology, workload, transaction workflows, and action costs.

Data for modeling the physical topology of infrastructure 110 may include a list of the hardware being simulated, including the capabilities of each component, and how the components are interconnected. The level of detail is normally chosen to match the level on which performance data can easily be obtained. For example, the MICROSOFT® WINDOWS® operating system may use performance counters to express performance data. These counters are typically enumerated down to the level of CPUs, network interface cards, and disk drives. Automated model configuration module 100 may model such a system by representing the system as individual CPUs, network interface cards, and disk drives in the physical topology description. Each component type may have a matching hardware model that is used to calculate the time taken for events on that component. Thus, the CPU component type is represented by the CPU hardware model, which calculates the time taken for CPU actions, such as computation.

Automated model configuration module 100 may use a hierarchical Extensible Markup Language (XML) format to encode hardware information, representing servers as containers for the devices that the servers physically contain. A component may be described with a template, which may encode the capabilities of that component. For example, a "PIII Xeon 700MHz" template encodes the performance and capabilities of an Intel PIII Xeon CPU running at a clock speed of 700 MHz. After the components have been named and described in this hierarchical fashion, the physical topology description may also include the network links between components. The physical topology description may be expressed as a list of pairs of component names, tagged with the properties of the corresponding network. Where more than one network interface card (NIC) is present in a server, the particular NIC being used may also be specified. Below is an example code related to physical topology modeling:

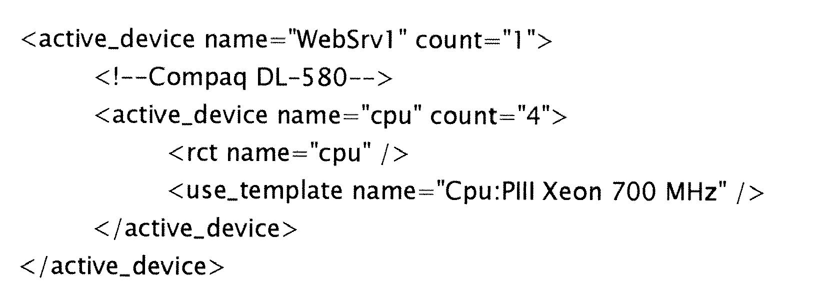

Data modeling for the logical topology of infrastructure 110 may include a list of the software components (or services) of the application being modeled, and a description of how components are mapped onto the hardware described in the physical topology. The list of software components may be supplied as part of the application model. For example, an application model of an e-commerce web site might include one application component representing a web server, such as MICROSOFT® Internet Information Services, and another application component representing a database server, such as MICROSOFT® SQL Server. The description of each application component may include the hardware actions that the application component requires in order to run.

Logical-to-physical mapping of application components onto hardware may be expressed using a list of the servers (described in the physical topology) that run each application component, along with a description of how load balancing is performed across the servers. Note that this is not necessarily a one-to-one mapping. A single application component may be spread across multiple servers, and a single server may host several application components. Below is an example code related to logical topology modeling:

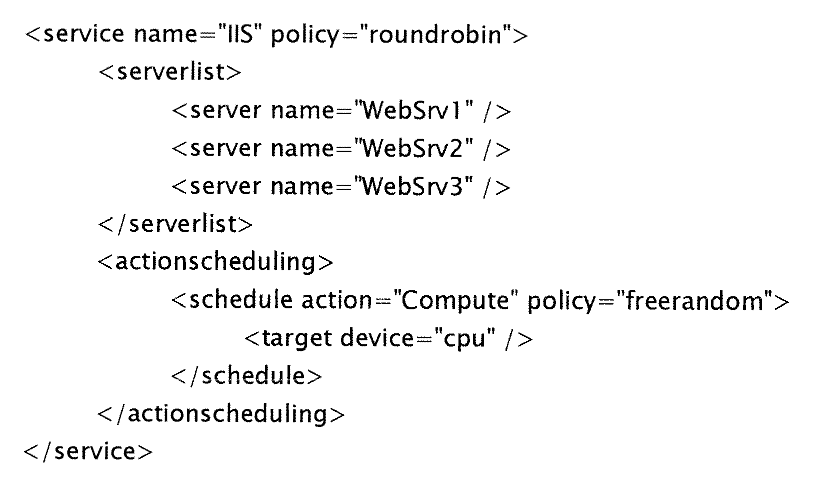

Data for modeling the workload of infrastructure 110 may include a list of name/value pairs, defining numeric parameters that affect the performance of the system being simulated. For example, the e-commerce web site described above might include parameters for the number of concurrent users, the frequency with which they perform different transactions, etc. Below is an example code related to workload modeling:

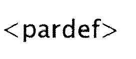

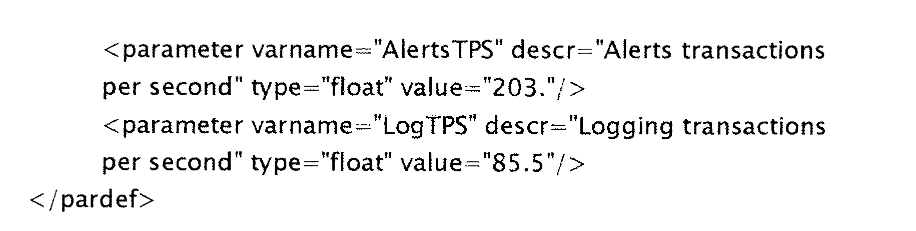

In one implementation, automated model configuration module 100 is configured to automatically configure the models of infrastructure 110 with existing data in data store 123 provided by management module 120. For example, automated model configuration module 100 may automatically configure the physical topology, the logical mapping of application components onto physical hardware from the logical topology, and the values of parameters from the workload. Typically, automated model configuration module 100 may initially create models as templates that describe the hardware or software in general terms. Automated model configuration module 100 then configures the models to reflect the specific instances of the items being modeled, such as how the hardware models are connected, how the software models are configured or used, or the like.

Simulation module 130 is configured to simulate actions performed by infrastructure 110 using models generated and configured by automated model configuration module 100. Simulation module 130 may include an event-based simulation engine that simulates the events of infrastructure 110. For example, the events may include actions of software components. The events are generated according to user load and are then executed by the underlying hardware. By calculating the time taken for each event and accounting for the dependencies between events, aspects of the performance of the hardware and software being modeled are simulated.

The system described above in conjunction with FIG. 1 may be used on any IT infrastructure. For example, a typical enterprise IT environment has multiple geo-scaled datacenters, with hundreds of servers organized in complex networks. It is often difficult for a user to manually capture the configuration of such an environment. Typically, users are required to only model a small subset of their environment. Even in this situation, the modeling process is labor-intensive. The described system makes performance modeling for event-based simulation available to a wide user base. The system automatically configures performance models by utilizing existing information that is available from enterprise management software.

By automating and simplifying configuration of models, the described system enables users to execute performance planning in a variety of contexts. For example, by enabling a user to quickly configure models to represent the current deployment, the system allows the user to create weekly or daily capacity reports, even in an environment with rapid change. Frequent capacity reporting allows an IT professional to proactively manage an infrastructure, such as anticipating and correcting performance problems before they occur.

The system described above also enables a user to easily model a larger fraction of an organization to analyze a wider range of performance factors. For example, a mail server deployment may affect multiple datacenters. If the relevant configuration data is available, models of the existing infrastructure with the mail server can be automatically configured and the models can be used to predict the latency of transactions end to end, e.g. determining the latency of sending an email from an Asia office to an American headquarters. Another example benefit of such analysis is calculating the utilization due to mail traffic of the Asian/American WAN link.

Performance analysis using the described system can also be used to troubleshoot the operations of a datacenter. For example, operations management software, such as MOM, may issue an alert about slow response times on a mail server. An IT Professional can use the system to automatically configure a model representing the current state of the system, simulate the expected performance, and determine if the problem is due to capacity issues or to some other cause.

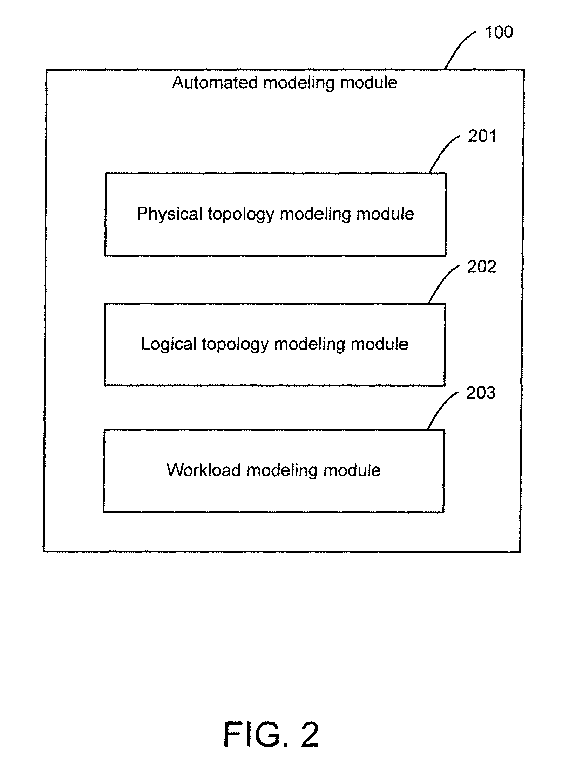

FIG. 2 shows example components of the automated modeling module 100 illustrated in FIG. 1. As shown FIG. 2, automated modeling module 100 may include physical topology modeling module 201, logical topology modeling module 202, and events analysis module 203. Modules 201-203 are shown only for illustrative purposes. In actual implementation, modules 201-203 are typically integrated into one component.

Physical topology module 201 is configured to model the physical topology of an infrastructure. The physical topology may be derived from data directly retrieved from a CCM application, an OM application, or a discovery application. For example, data may be retrieved from management module 120 in FIG. 1. Typically, the physical topology is derived using data retrieved from an operational database or data warehouse of the management module 120.

The retrieved data typically contains the information for construction a model of the infrastructure, such as a list of servers and the hardware components that they contain, and the physical topology of the network (e.g. the interconnections between servers). Physical topology module 201 may also be configured to convert the retrieved data to a format for creating models that are usable in a simulation. For example, the retrieved data may be converted to an XML format. Physical topology module 201 may also be configured to filter out extraneous information. For example, the retrieved data may contain memory size of components of the infrastructure, even through memory size is typically not directly modeled for simulation. Physical topology module 201 may further be configured to perform "semantic expansion" of the retrieved data. For example, physical topology module 201 may convert the name of a disk-drive, which may be expressed as a simple string, into an appropriate template with values for disk size, access time, rotational speed, or the like. Physical topology module 201 may be configured to convert data in various types of formats from different discovery applications.

Logical topology modeling module 202 is configured to map software components onto physical hardware models derived from data provided by management module 120. Data from both CCM applications and OM applications may be used. For example, a CCM application may record the simple presence or absence of MICROSOFT® Exchange Server, even though the Exchange Server may have one of several distinct roles in an Exchange system. By contrast, an OM application that is being used to monitor that Exchange Server may also include full configuration information, such as the role of the Exchange Server, which in turn can be used to declare the application component to which a performance model of Exchange corresponds.
Logical topology modeling module 202 may be configured to convert data of the underlying format to a format that is usable for simulation models and to filter out unneeded information, such as the presence of any application that is not being modeled.

Workload modeling module 203 is configured to derive the values of parameters from the user workload. Typically, the values are derived from data retrieved from management module 120. The retrieved data may contain current or historical information about the workload being experienced by one or more applications being monitored. Typical performance counters may include the number of concurrent users, the numbers of different transaction types being requested, or the like. A translation step may be performed to convert from the underlying format of the retrieved data into a format usable in a model for simulation and to perform mathematical conversions where necessary. For example, an OM database might record the individual number of transactions of different types that were requested over a period of an hour, whereas the model may express this same information as a total number of transactions in an hour, plus the percentage of these transactions that are of each of the different types.

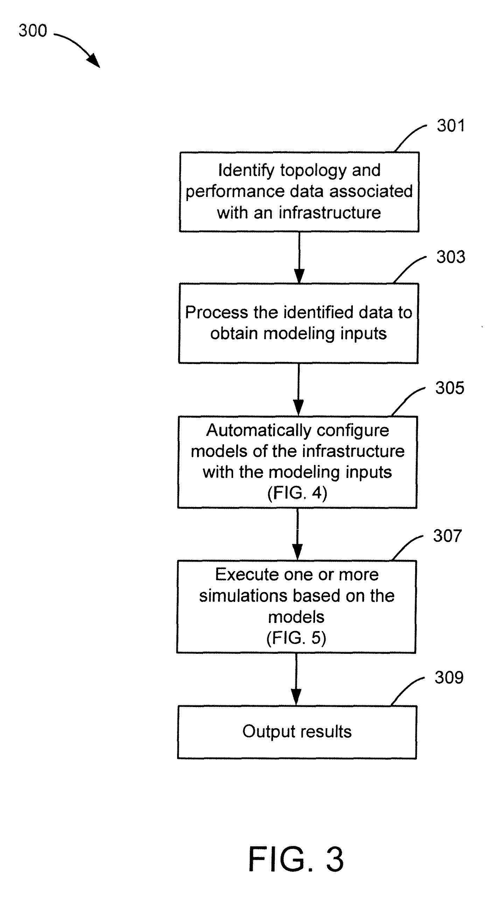

FIG. 3 shows an example process 300 for simulating the performance of an infrastructure. At block 301, topology and performance data associated with an infrastructure is identified. The identified data may be provided by one or more management applications of the infrastructure. The data may be provided directly by a management application or through an operational database or a data warehouse.

At block 303, the identified data is processed to obtain inputs for the model of the infrastructure. For example, topology data may be converted to a format that is usable by a modeling module or a simulation module, such as a XML format. Performance data may be converted to a form that is readily used to represent workload.

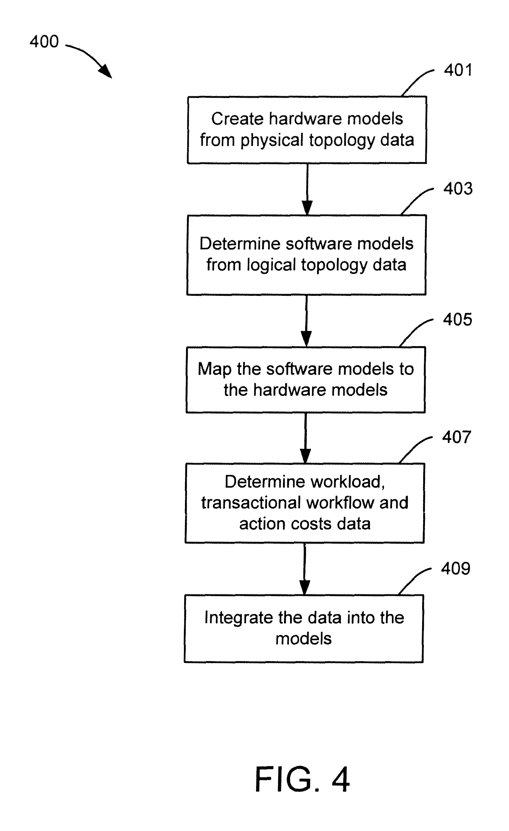

At block 305, a model of the infrastructure is automatically configured using the modeling inputs. An example process for automatically configuring a model of an infrastructure will be discussed in FIG. 4. Briefly stated, the model is configured using existing data from the management applications, such as data related to physical topology, logical topology, workload, transaction workflow, action costs, or the like.

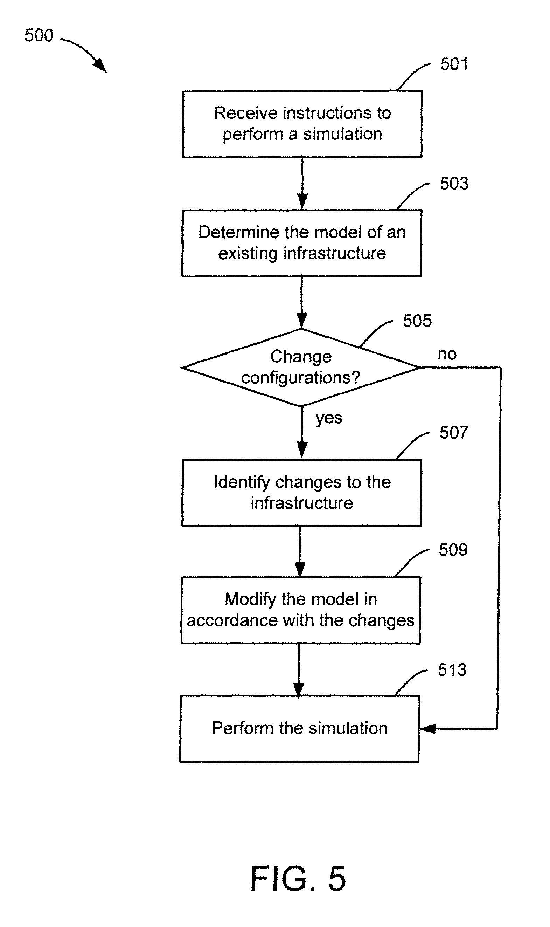

At block 307, one or more simulations are executed based on the models. The simulations are executed based on emulating events and actions with the models of the physical and logical components of the infrastructure. Simulations may be performed on the current configuration or potential configurations of the infrastructure. An example process for simulating an infrastructure using automatically configured models will be discussed in FIG. 5. At block 309, the results of the simulation are output.

FIG. 4 shows an example process 400 for automatically configuring a model of an infrastructure. Process 400 may be implemented by the automated model configuration module 100 shown in FIG. 1 and 2. At block 401, hardware models are configured using physical topology data provided by a management application of the infrastructure. The physical topology data may include hardware configurations for devices of the infrastructure and the components of those devices. Physical topology data may also include information regarding how the devices are connected.

At block 403, software models are determined from logical topology data provided by the management application of the infrastructure. The logical topology data may include information about the software components on devices of the infrastructure and the configuration of the software components. At block 405, the software models are mapped to the hardware models.

At block 407, workload data, transactional workflow data and action costs data are determined from the management application of the infrastructure. In particular, the data may define events and actions that are performed by the hardware and software components and the time and workload associated with these events and actions. At block 409, the data are integrated into the models. For example, the software and hardware models may be configured to reflect the performance of the models when performing the defined events and actions.

FIG. 5 shows an example process 500 for simulating an infrastructure using an automatically configured model. Process 500 may be implemented by the simulation module 130 shown in FIG. 1. At block 501, instructions to perform a simulation are received. The instructions may include information related to how the simulation is to be executed. For example, the instructions may specify that the simulation is to be performed using the existing configuration of the infrastructure or a modified configuration. The instructions may specify the workload of the simulation, such as using the current workload of the infrastructure or a different workload for one or more components of the infrastructure.

At block 503, the model of an existing infrastructure is determined. Typically, the model is provided by a modeling module and is automatically configured to reflect the current state of the infrastructure. At decision block 505, a determination is made whether to change the configurations of the infrastructure model. A simulation of the infrastructure with the changed configurations may be performed to predict the performance impact before the changes are actually implemented. If there are no configuration changes, process 500 moves to block 513.

Returning to decision block 505, if the determination is made to change the configurations, process 500 moves to block 507 where changes to the infrastructure are identified. The changes may be related to any aspects of the infrastructure, such as physical topology, logical topology, or performance parameters. At block 509, the model is modified in accordance with the identified changes. At block 513, the simulation is performed using the modified model.

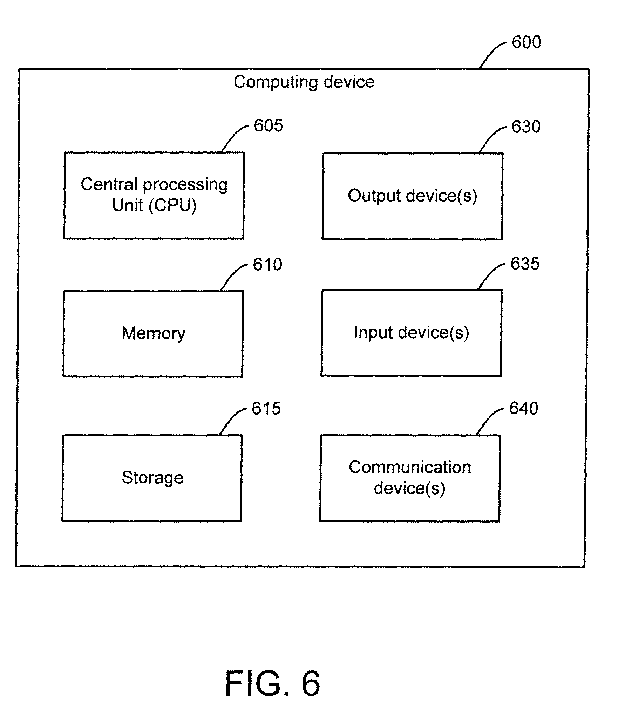

FIG. 6 shows an exemplary computer device 600 for implementing the described systems and methods. In its most basic configuration, computing device 600 typically includes at least one central processing unit (CPU) 605 and memory 610.

Depending on the exact configuration and type of computing device, memory 610 may be volatile (such as RAM), non-volatile (such as ROM, flash memory, etc.) or some combination of the two. Additionally, computing device 600 may also have additional features/functionality. For example, computing device 600 may include multiple CPU's. The described methods may be executed in any manner by any processing unit in computing device 600. For example, the described process may be executed by both multiple CPU's in parallel.

Computing device 600 may also include additional storage (removable and/or non-removable) including, but not limited to, magnetic or optical disks or tape. Such additional storage is illustrated in Fig. 6 by storage 615. Computer storage media includes volatile and nonvolatile, removable and non-removable media implemented in any method or technology for storage of information such as computer readable instructions, data structures, program modules or other data. Memory 610 and storage 615 are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can accessed by computing device 600. Any such computer storage media may be part of computing device 600.

Computing device 600 may also contain communications device(s) 640 that allow the device to communicate with other devices. Communications device(s) 640 is an example of communication media. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer-readable media as used herein includes both computer storage media and communication media. The described methods may be encoded in any computer-readable media in any form, such as data, computer-executable instructions, and the like.

Computing device 600 may also have input device(s) 635 such as keyboard, mouse, pen, voice input device, touch input device, etc. Output device(s) 630 such as a display, speakers, printer, etc. may also be included. All these devices are well know in the art and need not be discussed at length.

While the preferred embodiment of the invention has been illustrated and described, it will be appreciated that various changes can be made therein without departing from the spirit and scope of the invention.

## Claims

1. A computer-implemented method for modeling an infrastructure containing multiple devices, the infrastructure being monitored by a management application, the computer-implemented method comprising:
retrieving data associated with the infrastructure from the management application;
converting the data into a format usable for an event-based simulation;
generating a model of the infrastructure;
automatically configuring the model using the converted data; and
providing the model to a simulation engine.

2. The computer-implemented method as recited in claim 1, further comprising:
identifying device models corresponding to the devices in the infrastructure; and
automatically mapping software models to the generated device models.

3. The computer-implemented method as recited in claim 3, further comprising:
determining event-based data provided by the management application;
automatically configured the mapped device models with the event-based data; and
incorporating the configured device models into the model of the infrastructure.

4. The computer-implemented method as recited in claim 1, wherein the generated model represents a current state of the infrastructure.

5. The computer-implemented method as recited in claim 4, further comprising:
identifying changes to the state of the infrastructure; and
automatically modifying the model in accordance to the identified changes.

6. The computer-implemented method as recited in claim 5, wherein the changes include a modification of at least one of a device, a software component, or a workload.

7. The computer-implemented method as recited in claim 1, wherein the management application includes at least one of a change and configuration management (CCM) application, an operations management (OM) application, or a system or network discovery application.

8. The computer-implemented method as recited in claim 1, wherein the data associated with the infrastructure is related to at least one of physical topology, logical topology, workload, transactional workflow, or action costs.

9. The computer-implemented method as recited in claim 1, wherein the data associated with the infrastructure includes traces of events.

10. The computer-implemented method as recited in claim 1, wherein retrieving the data associated with the infrastructure includes retrieving the data from a data store that contains data provided by the management application.

11. The computer-implemented method as recited in claim 5, wherein data in the data store is included in at least one of an operational database or a data warehouse.

12. One or more computer-readable media encoded with computer-executable instructions for performing the computer-implemented method recited in claim 1.

13. An apparatus configured to perform the computer-implemented method as recited in claim 1.

14. A computer-implemented method for accessing performance of an infrastructure, the computer-implemented method comprising:
retrieving configuration and performance data associated with the infrastructure, the configuration and performance data being provided by a management application configured to monitor the infrastructure;
identifying a model of the infrastructure from the configuration and performance data;
automatically configuring the model using the configuration and performance data; and
simulating the performance of the infrastructure using the model.

15. The computer-implemented method of claim 14, further comprising:
identifying a change to the infrastructure;
automatically reconfigured the model to represent the change to the infrastructure; and
simulating the performance of the infrastructure using the reconfigured model.

16. The computer-implemented method of claim 15, wherein the change includes a modification to at least one of a device, a software component, or a workload.

17. A system comprising:
a management module configured to provide data associated with the configuration and the performance of an infrastructure; and
a modeling module configured to generate an event-based model of the infrastructure using the data provided by the management module and to automatically configure the event-based model using the data.

18. The system as recited in claim 17, wherein the modeling module is further configured to identify physical topology data provided by the management module, to create models of devices in the infrastructure based, at least in part, on the physical topology data, and to create the event-based model of the infrastructure based, at least in part, on the device models.

19. The system as recited in claim 18, wherein the modeling module is further configured to identify logical topology data provided by the management module and to automatically map models of software components in the infrastructure to the device models based, at least in part, on the logical topology data.

20. The system as recited in claim 19, wherein the modeling module is further configured to identify event-based data associated with the infrastructure and to automatically configure the models with the event-based data.

21. The system as recited in claim 20, wherein the event-based data is produced by at least one of an event tracing event tracing technique, Event Tracing for WINDOWS® (ETW) or Microsoft SQL Traces.

22. The system as recited in claim 17, further comprising a data store configured to receive data generated by the management module and to enable the modeling module to access the received data.

23. The system as recited in claim 22, wherein the received data is associated with aspects of the infrastructure that include at least one of physical topology, logical topology, workload, transactional workflow, or action costs.

24. The system as recited in claim 22, wherein the received data is contained in at least one of an operational database or a data warehouse.

25. The system as recited in claim 17, wherein the infrastructure includes at least one of servers, storage, routers, switches, or load balancers.

26. The system as recited in claim 25, wherein the servers are configured with at least one of an application or an operating system.

27. The system as recited in claim 17, wherein the management module includes at least one of MICROSOFT® Operation Manager (MOM), System Management Server (SMS), System Center, WinRoute for MICROSOFT® Exchange Server, or WMI event consumers for MICROSOFT® WINDOWS® Server.

28. A system comprising:
means for retrieving data associated with an infrastructure from a management application configured to monitor the infrastructure;
means for identifying a model of the infrastructure;
means for automatically configuring the model using the data; and
means for executing an event-based simulation using the model.

29. The system as recited in claim 28, further comprising:
means for performing at least one of a bottleneck analysis, a what-if analysis, operational troubleshooting, or automated capacity reporting.

30. The system as recited in claim 28, further comprising means for creating models of devices in the infrastructure.

31. The system as recited in claim 28, further comprising means for mapping software component models to the device models.
